# FASCICULE DE BREVET EUROPEEN

(11) **EP 2 288 627 B1**
(45) Date de publication et mention de la délivrance du brevet: **28.11.2012**
(21) Numéro de dépôt: 09766068.2
(22) Date de dépôt: 12.06.2009
(51) Int. Cl.: C08F 8/30, C08L 33/12, C08L 33/14, C08L 51/06

(54) **COMPOSITION RENFERMANT UN POLYMERE (METH)ACRYLIQUE ET UN COPOLYMERE PORTEUR DE GROUPES ASSOCIATIFS**
ZUSAMMENSETZUNG MIT EINEM (METH)ACRYLPOLYMER UND COPOLYMER MIT ASSOZIATIVEN GRUPPEN
COMPOSITION CONTAINING (METH)ACRYLIC POLYMER AND COPOLYMER HAVING ASSOCIATIVE GROUPS

(30) Priorité: 17.06.2008 FR 0853982
(43) Date de publication de la demande: 02.03.2011
(73) Titulaire: Arkema France, 92700 Colombes (FR); CNRS, 75016 Paris (FR)
(72) Inventeur: DUFAURE, Nicolas, F-27300 Bernay (FR); TOURNILHAC, François-Genes, F-75012 Paris (FR); HIDALGO, Manuel, F-69530 Brignais (FR); LEIBLER, Ludwik, F-75006 Paris (FR)
(74) Mandataire: Cabinet Plasseraud
(86) Numéro de dépôt international: PCT/FR2009/051113
(87) Numéro de publication internationale: WO 2009/153506

(56) Documents cités:
- WO-A1-2006/016041
- WO-A2-03/059964

## Description

La présente invention concerne de nouvelles compositions chimiques à base de polymère (méth)acrylique et de copolymère porteur de groupes associatifs.

Les matériaux dits supramoléculaires sont des matériaux constitués de composés associés par des liaisons non covalentes, telles que des liaisons hydrogène, ioniques et/ou hydrophobes. Il peut s'agir en particulier de polymères sur lesquels sont greffés des groupes associatifs, susceptibles de s'unir par des liaisons hydrogène coopératives. Un avantage de ces matériaux est que ces liaisons physiques sont réversibles, notamment sous l'influence de la température ou par l'action d'un solvant sélectif. La facilité de mise en oeuvre et/ou les propriétés des polymères, comme les propriétés mécaniques, rhéologiques, thermiques, optiques, chimiques, physico-chimiques, peuvent donc se trouver améliorées par le greffage de ces groupes associatifs. Ces derniers peuvent également conférer les propriétés de polymères de grande masse à des polymères de plus faible masse qui sont plus faciles à mette en oeuvre.

Le document US-2,980,652 divulgue ainsi un produit résultant de la réaction d'un motif porteur de groupes associatifs imidazolidone sur un copolymère issu de la copolymérisation de certains monomères à fonctions anhydrides, l'anhydride maléique ou l'anhydride itaconique ou l'anhydride citraconique, avec au moins un monomère éthylénique insaturé. Il est indiqué que ce produit a une bonne adhésion aux métaux, verre et matières plastiques. L'Exemple 9 divulgue plus particulièrement le produit de la réaction du N-aminoéthyl-2-imidazolidone (UDETA) sur un copolymère d'anhydride maléique et de méthacrylate de méthyle. Ce produit est formulé en une laque qui peut être pulvérisée sur des panneaux en acier (Exemples 14 et 15).

Par ailleurs, le document WO 2006/016041 divulgue des polymères greffés par des groupes associatifs permettant de leur conférer un module élastique plus élevé et une meilleure résistance aux solvants. Dans ce document, des chaînes macromoléculaires portent des groupes associatifs. Deux modes de préparation principaux permettent d'obtenir de tels matériaux.

Dans un cas, un polymère porteur de groupes réactifs (tels qu'acide, époxy ou anhydride) est greffé par une molécule portant un groupe associatif à base imidazolidone et un groupe réactif(amine, alcool...). Ce greffage peut-être réalisé soit en voie solvant, soit lors d'une étape d'extrusion réactive. Ce procédé ne peut donc s'appliquer que sur des polymères portant des fonctions réactives.

Une deuxième voie consiste à introduire les groupes réactifs lors de l'étape de polymérisation. Des monomères méthacryliques porteurs de groupes associatifs sont utilisés comme comonomères. Comparativement à la méthode précédemment décrite, cette technique permet d'obtenir un plus large choix de polymères (méth)acryliques porteurs de groupes associatifs. Néanmoins la modification directe par copolymérisation, pour être optimale, implique un bon contrôle des masses moléculaires et de la distribution des masses moléculaires, ainsi que du taux et distribution de groupes associatifs dans les chaînes modifiés, ce qui est souvent compliqué et onéreux. Ce type de procédé implique également une organisation industrielle lourde, l'obtention de polymères greffés par de groupes associatifs de masses et de taux de greffage différents impliquant de nombreux grades.

Dans ce contexte, la Demanderesse s'est intéressée aux moyens permettant de modifier par la chimie supramoléculaire des polymères (méth)acryliques tels que le PMMA en vue d'améliorer leurs propriétés, sans tenter de modifier la totalité ou la quasi-totalité des chaînes macromoléculaires du matériau.

Il est du mérite de la Demanderesse d'avoir mis au point une composition chimique permettant de conduire à un matériau de type supramoléculaire à base de polymère (méth)acrylique, présentant des propriétés améliorées tout en conservant une majorité des chaînes polymères libres de groupes associatifs. Pour atteindre ce but, la Demanderesse a imaginé une "modification indirecte" d'un polymère (méth)acrylique tel que le PMMA, par mélange, lors de sa mise en oeuvre, avec un copolymère riche en monomères qui après polymérisation donnent des mélanges compatibles avec le polymère (méth)acrylique et portant par ailleurs des groupes associatifs. Il est ainsi possible d'obtenir un mélange homogène hautement compatible de polymères et de véhiculer indirectement des groupes associatifs dans un polymère (méth)acrylique en vue de lui conférer différentes propriétés.

Le choix de polymères (méth)acryliques pouvant être modifié est ainsi très large, et peut être effectué par simple mélange. L'utilisateur souhaitant modifier un tel polymère n'a ainsi pas à procéder directement à une extrusion réactive du polymère à modifier, ni à réaliser une co-polymérisation directement pour obtenir la modification souhaitée, mais beaucoup plus simplement à ajouter à son matériau polymère(méth)acrylique à modifier tel que le PMMA, un copolymère riche en monomères qui après polymérisation donne des mélanges compatibles avec le polymère (méth)acrylique et portant par ailleurs des groupes associatifs.

Plus précisément, il a été mis en évidence que le polymère porteur des groupes associatifs permettait de conférer au polymère (méth)acrylique à modifier tel que le PMMA des propriétés de résistances au fluage et aux solvants améliorées et pouvait éventuellement lui apporter en outre des propriétés thermiques améliorées, en particulier une température de transition vitreuse plus élevée. Ceci peut être obtenu sans modifier le comportement viscoélastique du matériau (méth)acrylique aux températures de mise en forme.

Il a également été mis en évidence que la teneur en groupes associatifs peut être réduite, par rapport aux procédés de modification de l'ensemble des chaînes, pour obtenir des propriétés similaires.

La présente invention a donc pour objet une composition comprenant au moins un polymère (méth)acrylique et au moins un copolymère renfermant des motifs issus d'au moins un premier monomère (A) permettant la compatibilité avec ledit polymère (méth)acrylique et renfermant au moins un second motif (B) porteur d'un groupe associatif.

Par polymère (méth)acrylique, on entend au sens de l'invention, un polymère acrylique ou un polymère méthacrylique. Le polymère (méth)acrylique peut en particulier être un homo- ou copolymère à base de méthacrylate de méthyle. Il s'agit généralement d'un polymère thermoplastique. Le polymère (méth)acrylique peut être un copolymère dont un des comonomères est le méthacrylate de méthyle

Un exemple préféré de polymère (méth)acrylique est le poly(méthacrylate de méthyle) ou PMMA et ses copolymères, parfois appelés aussi PMMA lorsque le taux de méthacrylate de méthyle dans le copolymère est majoritaire. Un tel polymère est notamment commercialisé par la société ARKEMA sous la dénomination commerciale Altuglas^{®}. D'autres polymères (méth)acryliques utilisables dans cette invention peuvent être les homopolymères poly(acide acrylique), poly(acide méthacrylique) et les homopolymères de leurs esters comme, par exemple, le poly(acrylate de butyle), le poly(acrylate de 2-éthylhéxyle), le poly(acrylate de méthyle), le poly(acrylate d'éthyle), le poly(méthacrylate de polyéthylène glycol), le poly(méthacrylate de méthoxy polyéthylène glycol), l'homopolymère poy(acrylonitrile), ainsi que leurs copolymères incluant au moins 2 des monomères cités entre parenthèses. Il est également possible que le polymère (méth)acrylique selon l'invention soit un mélange incluant au moins 2 des polymères ou copolymères (méth)acryliques ci-dessus. Le polymère (méth)acrylique selon l'invention decrit dans ce paragraphe sera le plus souvent appelé simplement polymère (méth)acrylique dans ce qui suit.

Le PMMA ou ses copolymères est préféré pour une utilisation dans la présente invention.

Le polymère (méth)acrylique peut être obtenu suivant des procédés de polymérisation en suspension, en micro-suspension, en émulsion ou en masse, bien connus de l'homme du métier.

Il peut représenter de 1 à 99,5 % en poids, et de préférence de 5 à 99,5 %, de 10 à 99,5 %, de 20 à 99,5 %, de 30 à de 40 à 99,5 % et même de 50 à 99 % en poids par rapport au poids total de la composition selon l'invention.

Ce polymère (méth)acrylique peut être formulé dans une composition conduisant après mise en oeuvre, à un matériau final de préférence rigide et transparent, pouvant comprendre un ou plusieurs additifs décrits plus en détail ci-après.

Ce polymère (méth)acrylique est associé, dans la composition selon l'invention, à un copolymère portant des groupes associatifs, pour former un "compound".

Ce copolymère portant des groupes associatifs renferme des motifs d'au moins un premier monomère (A) rendant ledit copolymère compatible avec ledit polymère (méth)acrylique et renferme au moins un second motif (B) porteur d'un groupe associatif. Le monomère (A) représente de préférence au moins 20% en mole du copolymère. Le copolymère portant des groupes associatifs selon l'invention sera le plus souvent appelé simplement « copolymère », dans ce qui suit ;

Par « compatible », on entend que le polymère (méth)acrylique et le copolymère forment un mélange homogène, en ce sens qu'ils présentent une miscibilité telle que le polymère (méth)acrylique soit gonflé par le copolymère ou que le polymère (méth)acrylique gonfle le copolymère, dans les proportions utilisées dans le mélange. Cela se traduit par le fait que le polymère (méth)acrylique et le copolymère ne forment qu'une seule phase. Selon la nature du copolymère et en particulier du monomère (A) utilisé pour sa synthèse, la compatibilité au sens de l'invention avec le polymère (méth)acrylique peut être obtenue dans des proportions variables du mélange des deux polymères (polymère (méth)acrylique et copolymère portant des groupes associatifs). Cette compatibilité peut être mise en évidence par des mesures physiques de miscibilité.

Cette miscibilité peut être repérée par différentes méthodes analytiques connues de l'homme du métier comme la microscopie électronique à balayage (MEB) ou à transmission (MET) ou encore la microscopie de force atomique (AFM), permettant souvent de repérer des inhomogénéités des mélanges sous la forme de domaines de taille caractéristique supérieure à 1 micron (immiscibilité), ainsi que par des mesures de température de transition vitreuse, Tg, du mélange des deux polymères: la miscibilité se traduit alors par l'existence d'une seule Tg pour le mélange. Les méthodes de mesure de la Tg des polymères et des mélanges de polymères sont connus de l'homme du métier et incluent la calorimétrie différentielle à balayage (DSC), la volumétrie ou l'analyse mécanique dynamique (DMA). Il est également possible de déterminer la miscibilité par des mesures optiques comme la transparence. Lorsque la miscibilité est déterminée par des mesures de transparence dans les systèmes polymères non cristallins, comme le PMMA, la différence de transparence entre celle d'une éprouvette ou fiche du mélange, d'une épaisseur de 2 à 4 mm, et la transparence d'une éprouvette ou fiche du mélange du polymère (méth)acrylique seul et de la même épaisseur, ne doit pas être perceptible à l'oeil nu; autrement dit, lorsque le mélange n'est pas compatible au sens de l'invention, apparaît, en comparaison avec l'échantillon du polymère (méth)acrylique seul, un voile ou une opacité suffisamment perceptible à l'oeil et facilement quantifiable par des mesures optiques de transparence connues de l'homme du métier (comme le pourcentage de transmittance ou le pourcentage de haze).

Ainsi, tout copolymère portant des groupes associatifs et compatible, dans le sens expliqué ci-dessus, avec le polymère (méth)acrylique, peut être utilisé pour l'invention, en particulier, tout copolymère à base d'un monomère (A) dont l'homopolymère correspondant est connu pour être miscible avec le polymère (méth)acrylique ou dont la présence de motifs issus du monomère (A) entraîne la compatibilité avec le polymère (méth)acrylique.

Le choix du monomère (A) du copolymère portant des groupes associatifs dépend de la composition du polymère (méth)acrylique selon l'invention.

Selon l'invention, il est ainsi possible de mélanger un polymère (méth)acrylique avec un copolymère portant des groupes associatifs de masse moléculaire très différente, de façon à combiner les avantages de ces deux types de polymères.

Selon l'invention, il est ainsi possible de mélanger un polymère (méth)acrylique (polymère 1) avec un copolymère portant des groupes associatifs (polymère 2) de masse moléculaire très différente, de façon à combiner les avantages de ces deux types de polymères. Plus particulièrement si le polymère 1 de masse M1 est mélangé avec une faible proportion de polymère 2 de masse moléculaire M2, avec M2>M1 on peut obtenir un matériau dont la viscosité à faible gradient est sensiblement plus élevée que celle du polymère 1 alors que la viscosité à grand gradient demeure peu supérieure à celle du polymère 1.

Cette situation est avantageuse du point de vue des procédés de mise en oeuvre des matières plastiques lorsque l'on souhaite obtenir à la fois une viscosité peu élevée aux vitesses de mise en forme et une tenue en fondu(ou « melt strengh ») élevée.

Cette méthode permet également d'avoir des propriétés de résistance au choc et de résistance aux solvants améliorés en utilisant des teneurs peu élevées en copolymère portant des groupes associatifs (polymère 2).

Comme exemples non exclusifs, de monomères (A), on peut citer le méthacrylate de méthyle, l'acide acrylique, l'acide méthacrylique, les esters d'acide acrylique, les esters d'acide méthacrylique, l'acrylonitrile, l'anhydride maléique. Comme exemples de copolymères portant des groupes associatifs pouvant être mélangés, à de proportions variables selon leur nature et celle du polymère (méth)acrylique, avec le polymère (méth)acrylique pour obtenir la compatibilité et les effets de « modification indirecte » par des liaisons physiques réversibles selon l'invention, on peut citer les copolymères de méthacrylate de méthyle (dits copolymères type PMMA) portant des groupes associatifs, les copolymères de l'anhydride maléique portant des groupes associatifs ou les copolymères d'acrylonitrile portant des groupes associatifs, et de manière plus générale, tous les polymères issus des monomères précédemment cités.

Par "groupes associatifs", on entend des groupes susceptibles de s'associer les uns aux autres par des liaisons hydrogène, avantageusement par 1 à 6 liaisons hydrogène. Des exemples de groupes associatifs utilisables selon l'invention sont les groupes imidazolidinyle, triazolyle, triazinyle, bis-uréyle, uréido-pyrimidyle, les groupes imidazolidinyle étant préférés.

Selon un mode de réalisation de l'invention, les groupes associatifs peuvent être introduits lors de la formation du copolymère. Ce mode de réalisation n'est pas limitatif, une extrusion réactive d'un mélange de groupes associatifs avec le polymère (méth)acrylique préalablement formé pouvant aussi être envisagée.

Le copolymère est ainsi susceptible d'être obtenu par copolymérisation du monomère (A) avec un monomère (B) qui porte les groupes associatifs et éventuellement un ou plusieurs autres monomères, de préférence à partir:
- d'une part, d'un monomère (A) qui est un monomère dont l'homopolymère correspondant est connu pour être miscible avec le polymère (méth)acrylique ou dont la présence de motifs issus du monomère (A) entraîne la compatibilité avec le polymère (méth)acrylique, ce monomère étant choisi parmi: le méthacrylate de méthyle, l'acide acrylique, l'acide méthacrylique, les esters d'acide acrylique, les esters d'acide méthacrylique, l'acrylonitrile, et l'anhydride maléique,
- d'autre part, d'un monomère (B) porteur de groupes associatifs, de préférence de groupes imidazolidinyle, qui est avantageusement choisi parmi: le méthacrylate d'éthylimidazolidone (ou MEIO) et le méthacrylamide d'éthylimidazolidone,
- éventuellement, d'un ou plusieurs autres monomères choisis parmi les acides acrylique ou méthacrylique, leurs esters, leurs amides ou leurs sels, l'acide itaconique, ses esters, ses amides ou ses sels, le styrène et ses dérivés comme le 4-styrène sulphonate.

Dans un mode de réalisation préféré de la composition, le polymère (méth)acrylique est le poly(méthacrylate de méthyle) et le copolymère renfermant des motifs issus d'un monomère (A) est du méthacrylate de méthyle. Ainsi, la composition peut comprendre un mélange de PMMA et de PMMA porteur de groupes associatifs.

Un tel copolymère peut être préparé selon des méthodes connues de polymérisation radicalaire en solution dans des solvants comme le chloroforme ou le tetra-hydrofurane ou en milieu dispersé comme, en particulier, en suspension ou en émulsion aqueuse. De manière préférée, le copolymère utilisé dans l'invention peut être obtenu par polymérisation radicalaire en suspension ou en émulsion aqueuse. Dans le cas des polymérisations en solution ou en suspension aqueuse, la polymérisation peut être amorcée à l'aide d'amorceurs de polymérisation radicalaire solubles dans le mélange de monomères. Différents mécanismes de génération de radicaux peuvent être mis en oeuvre comme, par exemple, la décomposition thermique, les réactions d'oxydo-réduction, la décomposition provoquée par le rayonnement électromagnétique et, en particulier, la lumière dans l'ultra-violet. Des exemples non-exclusifs d'amorceurs incluent les hydroperoxydes, les peroxydes de dialkyle, les peroxydes de diacyle, les peroxyesters, les peroxydicarbonates, les peroxyacétals, les composés azoïques et leurs combinaison avec des agents favorisant leur décomposition comme des amines et des atomes métalliques.

A titre d'exemples d'hydroperoxydes, on peut citer l'hydroperoxyde de tert-butyle, l'hydroperoxyde de tert-amyle, l'hydroperoxyde de cumyle, le 2,5-diméthyl-2,5 di(hydroperoxy)hexane, le monohydroperoxyde de diisopropyl benzène et l'hydroperoxyde de paramenthane.

A titre d'exemples de peroxydes de dialkyle, on peut citer le 2,5-diméthyl-2,5-di(tert-butylperoxy)hexyne-(3), le peroxyde de di-tert-butyle, le peroxyde de di-tert-amyle, le 1,3-di(tertbutylperoxyisopropyl)benzène, le é,5-diméthyl-2,5-di(tert-butylperoxy)hexyne, le 1,1,4,4,7,7-hexaméthylcyclo-4,7-diperoxynonane, le 3,3,6,6,9,9-hexaméthylcyclo-1,2,',5-tétraoxanonane.

A titre d'exemples de peroxydes de diacyle, on peut citer le peroxyde de benzoyle, le peroxyde de lauroyle, le peroxyde de décanoyle, le peroxyde de 3,5,5-triméhylhexanoyle, le peroxyde d'acétyle et de cyclohexyl sulfonyle.

A titre d'exemples de peroxyesters, on peut citer le peroxybenzoate de tert-butyle, le peroxyacétate de tert-butyle, le peroxy-3,5,5-triméthylhexanoate de tert-butyle, le peroxy-3,5,5-triméthylhexanoate de tert-amyle, le 2,5-diméthyl-2,5-di(benzoylperoxy)hexane, le 00-tert-butyl-0-isopropylmonoperoxycarbonate, le 00-tert-butyl-0-(2-éthylhexyl)-monoperoxycarbonate, le peroxyisobutyrate de tert-butyle, le peroxy-2-éthylhexanoate de tert-butyle, le peroxy-2-éthylhexanoate de tert-amyle, le 2,5-diméthyl-2,5-di(2-éthylhexanoylperoxy)hexane, le peroxynéodécanoate de tert-butyle, le peroxyisononanoate de tert-butyle, le peroxypyvalate de tert-butyle, le peroxypyvalate de tert-amyle, le peroxynéodécanoate d'α-cumyle, le peroxydécanoate de tert-amyle, le 3-hydroxy-1,1-diméthylbutylperoxynéodécanoate de tert-butyle et le peroxymaléate de tert-butyle.

A titre d'exemples de peroxydicarbonates, on peut citer le peroxydicarbonate de di(2-éthylhexyle), le peroxydicarbonate de dicyclohexyle, le peroxydicarbonate de di(n-propyle), le peroxydicarbonate de di(4-tert-butylcyclohexyle).

A titre d'exemples de peroxyacétals, on peut citer le 1,1-di(tert-butylperoxy)cyclohexane, le 1,1-di(tert-butylperoxy)3,3,5-triméthylcyclohexane, le 3,3-di(tert-butylperoxy)butyrate d'éthyle, le 3,3-di(tert-amylperoxy)butyrate d'éthyle, le 3,3-di(tert-amylperoxy)butyrate d'éthyle, le 4,4-di(tert-butylperoxy)valérate de n-butyle, le 2,2-di(tert-butylperoxy)butane, le 1,1-di(tert-amylperoxy)cyclohexane, le 2,2-bis[4,4-di(tert-butylperoxy)chyclohexyl]propane.

A titre d'exemples de composés azoïques, on peut citer le 2,2' azo-bis isobutyronitrile ou 2-[(*E*)-(1-cyano-1-méthyléthyl)diazènyl]-2-methylpropanenitrile , le 2-[(*E*)-(1-cyano-1-méthylpropyl)diazènyl]-2-méthylbutanenitrile ou azo-bis méthyl butyronitrile, l'azo-bis isobutyramide, le diméthyl azo-bis di isobutyrate, le diéthyl azo-bis isobutyrate, l'acide cyanovalérique ou acide 4-[(*E*)-(3-carboxy-1-cyano-1-méthylpropyl)diazènyl]-4-cyanopentanoique.

La polymérisation peut également être amorcée par des amorceurs-controleurs de polymérisation radicalaire contrôlée, tels que les alcoxyamines et, plus particulièrement par l'acide 2-méthyl-2-[N-tertiobutyl-N-(diéthoxyphosphoryl-2,2-diméthylpropyl)aminoxy]propionique de formule suivante : 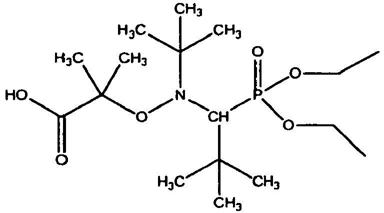 commercialisé par Arkema sous la marque BlocBuilder^{®} et ses sels métalliques ou organiques.

Ces amorceurs peuvent être utilisés à hauteur de 0,05 à 10% en poids par rapport au poids total des monomères.

Dans le cas des polymérisations en solution organique en suspension ou en émulsion aqueuse, en plus des amorceurs de polymérisation, il peut s'avérer utile de dissoudre dans les monomères d'autres additifs, parmi lesquels on peut citer les agents de transfert de chaîne, permettant de diminuer les masses moléculaires. A titre d'exemples d'agents de transfert de chaîne on peut citer les alkyl mercaptans, comme le méthyl mercaptan, l'éthyl mercaptan, le n-propyl mercaptan, l'isopropyl mercaptan, le n-butyl mercaptan, le tert-butyl mercaptan, le cyclohexyl mercaptan, le benzyl mercaptan, le n-octyl mercaptan, le tert-nonyl mercaptan, le n-dodécyl mercaptan, le tert-dodécyl mercaptan, les alkyl thioglycolates comme le méthyl thioglycolate, l'éthyl thioglycolate, le 2-éthyl-hexyl thioglycolate ou l'isooctyl thioglycolate. Les agents de transfert de chaîne sont utilisés dans des proportions comprises entre 0,01 et 10%, et de préférence entre 0,5 et 2% en poids par rapport au poids total des monomères.

Dans les cas des polymérisations en solution organique ou en milieu dispersé comme la polymérisation en suspension ou en émulsion aqueuses, il est également possible de dissoudre dans les monomères, d'autres additifs tels que des antioxydants, comme le butylhydroxytoluène BHT, des biocides, des activateurs d'amorceurs de polymérisation. Ces additifs sont utilisés dans des proportions comprises entre 0,01% et 5% en poids par rapport au poids total des monomères.

Dans le cas des polymérisations en suspension aqueuse, le mélange des monomères comprenant l'amorceur de polymérisation et éventuellement d'autres additifs dissous dans ce mélange, est dispersé dans une phase aqueuse continue contenant un agent de suspension favorisant la stabilité de la suspension pendant la polymérisation. Parmi les agents de suspension pouvant être utilisés, on peut citer, à titre d'exemple non exclusif, les poudres minérales finement divisées comme le talc ou le triphosphate de calcium, les polymères agents de suspension, parfois appelés également colloïdes protecteurs comme les alcools polyvinyliques partiellement ou complètement hydrolisés, les copolymères de styrène et d'acide (méth)acrylique avec ou sans un tiers monomère comme l'α-méthyl styrène, certains tensioactifs comme les esters éthoxylés de sorbitan, les polymères hydrosolubles épaississants comme l'hydroxyéthyl cellulose les polymères et copolymères à base d'acide (meth)acrylique ou ses sels, les polymères et copolymères à base de (meth)acrylamide et ses dérivés ou le polyacrylamido propane sulfonate. Les agents de suspension sont utilisés dans des proportions allant de 0,05 à 10%, et de préférence de 0,1% à 5% en poids par rapport au poids total de la phase dispersée contenant les monomères. En combinaison avec les agents de suspension, d'autres additifs ajoutés à la phase aqueuse, tels que des sels, comme les sulfates de sodium ou ammonium, parfois appelés « extenders » permettant de contrôler la force ionique du milieu, ou des régulateurs de pH comme le bicarbonate de sodium peuvent être utilisés dans des proportions allant de 0,05 à 5% en poids par rapport au poids total de la phase aqueuse continue.

Dans le cas des polymérisations en émulsion aqueuse, des amorceurs de polymérisation radicalaire solubles dans l'eau sont utilisés. Différents mécanismes de génération de radicaux peuvent être mis en oeuvre comme, par exemple, la décomposition thermique, les réactions d'oxydoréduction, la décomposition provoquée par le rayonnement électromagnétique et, en particulier, la lumière dans l'ultra-violet. Des exemples non-exclusifs d'amorceurs hydrosolubles incluent les hydroperoxydes comme l'hydroperoxyde de tert-butyle, les composés azoïques hydrosolubles tels que le 2,2'-Azobis-(2-amidinopropane)dihydrochlorure et les sels organiques ou minéraux de l'acide 4,4'-Azobis-(4cyano valérique), les oxydants minéraux tels que les persulfates de sodium, potassium ou ammonium, l'eau oxygénée, les perchlorates, les percarbonates, les sels férriques ; ces oxydants peuvent être utilisés seuls ou en combinaison avec des réducteurs minéraux ou organiques tels que le bisulfite ou le métabisulfite de sodium ou de potassium, la vitamine C, les hypophosphites de sodium ou de potassium. Ces réducteurs organiques ou minéraux peuvent également être utilisés seuls, c'est-à-dire, en absence d'oxydants minéraux. Les amorceurs solubles dans la phase aqueuse sont utilisés dans le cas des polymérisations en émulsion, dans des proportions allant de 0,01 à 10% en poids par rapport au poids total des monomères.

Dans le cas des polymérisations en émulsion aqueuse, des tensioactifs ou des stabilisants permettant de constituer les émulsions de départ et de stabiliser les latex finaux obtenus peuvent être utilisés. Trois familles de tensioactifs ou stabilisants peuvent être considérées, à savoir :
1) les molécules tensioactives d'origine naturelle ou synthétique ayant un effet dispersant et stabilisant par répulsion électrostatique et comprenant les molécules amphiphiles chargées positivement ou négativement, ou formant des zwitter-ions (amphotères), en phase aqueuse, parmi lesquelles on peut citer, à titre d'exemples non exclusifs : les alkyl sulfates ou sulfonates de sodium ou potassium, en particulier le dodécyl sulfate de sodium, les alkyl aryl sulfates ou sulfonates de sodium ou potassium, en particulier le dodécyl benzène sulfonate de sodium les sels de potassium, sodium ou ammonium des acides gras, en particulier le stéarate de sodium, les diphenyl oxydes alkylés et disulfonés, en particulier les tensioactifs commerciaux de la gamme Dowfax^{®}, comme le Dowfax^{®} 2A1, les sulfosuccinates et, en particulier, les tensioactifs commerciaux de la gamme Aerosol^{®} comme l'Aerosol^{®} MA 80 qui est le sodium dihexyl sulfosuccinate ou l'Aerosol^{®} OT-75 qui est le sodium di-octyl sulfosuccinate, les esters phosphoriques, amines grasses, les polyamines et leurs sels, les sels d'ammonium quaternaire, comme les alkyl triméthyl chlorures ou bromures d'ammonium, les betaïnes comme les N-alkyl betaïnes ou les sulfobetaïnes, les imidazolines carboxylates, ainsi que les dérivés éthoxylés de tous ces composés.
2) les molécules tensioactives ayant un effet dispersant et stabilisant par répulsion stérique, non chargées ou non-ioniques parmi lesquelles on peut citer, à titre d'exemples non exclusifs : les alkyl phénols éthoxylés, les alcools gras éthoxylés, les copolymères à blocs de polyoxyde d'éthylène et polyoxyde de propylène, comme ceux de la gamme Pluronics, les esters d'acides gras, les alkyl polyglycosides
3) les molécules polymériques amphiphiles ou complètement hydrophiles, chargées ou non, parmi lesquelles on peut citer, à titre d'exemples non exclusifs : les polymères d'origine naturelle ou synthétique solubles dan l'eau tels que les polymères et copolymères de l'acide (meth)acrylique et leurs sels, les polymères et copolymères de l'acrylamide et ses dérivés, les polymères à base d'alcool vinylique et acétate de vinyle, l'hydroxyéthyl cellulose et l'hydroxyéthyl cellulose modifié hydrophobe, le polyvinyl caprolactame, le polyvinyl pyrrolidone.

Ces dispersants ou stabilisants utilisés en polymérisation en émulsion sont présents à hauteur de 0,1 à 10% en poids par rapport au poids total des monomères. Il est également possible de conduire des polymérisations en émulsion en absence de tensioactifs ou agents stabilisants ou dispersants ; dans ce cas particulier, les proportions finales de polymère, exprimées en termes de taux de solides final ou extrait sec final, c'est-à-dire, après évaporation des volatils et, en particulier de l'eau, sont inférieures à 20% en poids du total du latex issu de la polymérisation en émulsion.

Les procédés en solution, d'une part et en suspension ou émulsion aqueuse d'autre part, pouvant être utilisés pour la synthèse des copolymères portant les groupes associatifs, selon l'invention, peuvent être conduits à pression atmosphérique ou sous pression et à des températures de polymérisation comprises entre 5°C et 180°C. De manière préférée le copolymère est obtenu par un procédé en suspension ou en émulsion aqueuse à pression atmosphérique et des températures de polymérisation comprises entre 50 et 95°C. Les concentrations finales ou après polymérisation de polymère et autres composants non volatils pour les polymérisations en solution, suspension aqueuse ou émulsion aqueuse se trouvent comprises entre 1 et 75% et de préférence entre 15 et 50% en poids, exprimées en extrait sec ou taux de solide finaux, par rapport au poids total de la solution, suspension ou émulsion (latex).

Le procédé de synthèse du copolymère peut être continu ou par lots (« batch ») ou, encore de type semi-continu, c'est-à-dire avec ajouts dosés de composants, comme par exemple des ajouts dosés de monomères, tels que ou pré-émulsifiés comme c'est souvent le cas dans les polymérisations en émulsion aqueuse, des ajouts dosés d'additifs comme des dispersants ou stabilisants, des amorceurs, ou d'autres additifs.

D'une manière générale, les procédés préférés de suspension aqueuse et d'émulsion aqueuse, utilisés pour l'obtention du copolymère portant les groupes associatifs selon l'invention, sont bien connus de l'homme du métier et décrits dans des ouvrages généraux et spécialisés, comme, par exemple, dans le Chapitre 7 du livre Les latex synthétiques : Elaboration, Propriétés, Applications, coordonné par C. Pichot et J.C. Daniel (Editions TEC&DOC de Lavoisier. France 2006).

Dans une autre forme d'exécution de l'invention, le copolymère peut être obtenu par greffage des groupes associatifs sur un copolymère déjà constitué comprenant, outre le monomère (A), un monomère (B') renfermant au moins une fonction réactive, telle qu'une fonction acide, anhydride, alcool, mercaptan, amine, époxy ou isocyanate, de préférence anhydride, par réaction d'un ou plusieurs agents de modification, portant d'une part un groupe associatif, et d'autre part un groupe réactif, choisi parmi les groupes amine, mercaptan, époxy, isocyanate, anhydride, alcool, de préférence amine, ledit groupe réactif étant susceptible de former une liaison covalente avec ladite fonction réactive.

Dans cette forme d'exécution, le copolymère porteur de fonctions réactives peut par exemple être un homo- ou copolymère de (méth)acrylate d'alkyle, ayant par exemple une masse moléculaire moyenne en nombre allant de 1.000 à 10.000.000 g/mol, et de préférence de 5.000 à 100.000 g/mol, renfermant des fonctions anhydride. Celui-ci peut être obtenu à partir d'un copolymère de (méth)acrylate d'alkyle, notamment de méthyle, et d'acide (méth)acrylique comme le grade Altuglas^{®} HT 121 d'Arkema, renfermant par exemple entre 1 et 15 % en moles d'unités acide (méth)acrylique, suivant un procédé de cyclisation, dans des conditions de catalyse basique, qui peut notamment être mis en oeuvre dans une extrudeuse. Parmi les catalyseurs basiques préférés on compte la soude et le méthoxyde de sodium, CH₃ONa. La cyclisation peut s'effectuer par passage dans une extrudeuse à vis simple ou double du copolymère de départ avec le catalyseur et éventuellement d'autres additifs, tels que des lubrifiants, des antioxydants, des colorants, des correcteurs optiques pour donner du brillant et réduire le jaunissement ; la température d'extrusion peut être comprise entre 200 et 300° C et de préférence supérieure à 250°C. Un ou plusieurs passages en extrusion peuvent être effectués pour obtenir le niveau de cyclisation (formation d'anhydride glutarique) souhaité. Le taux de cyclisation peut être contrôlé pour ajuster le taux de fonctions anhydride obtenues, qui peut par exemple aller de 0,1 à 20% en moles.

Les groupes réactif et associatif, respectivement, de l'agent de modification peuvent être séparés par une chaîne rigide ou flexible, constituée de 1 à 30 atomes de carbone dont certains au moins peuvent être substitués, et éventuellement d'un ou plusieurs hétéroatomes, choisis en particulier parmi le soufre, l'oxygène et l'azote, ladite chaîne renfermant éventuellement un ou plusieurs ponts ester ou amide. Il s'agit de préférence d'une chaîne alkylène linéaire ou ramifiée en C₁-C₁₀ éventuellement interrompue par un ou plusieurs atomes d'azote, plus préférentiellement d'une chaîne alkylène linéaire en C₁-C₆.

Des exemples préférés d'agents de modification sont la 1-(2-aminoéthyl)imidazolidin-2-one (UDETA), la 1-(2-[(2-aminoéthyl)amino]éthyl)imidazolidone (UTETA), la 1-(2-{2-[(2-aminoéthylamino]éthyl}amino)éthyl]imidazolidone (UTEPA), le 3-amino-1-H-1,2,4-triazole (3-ATA) et le 4-amino-1-H-1,2,4-triazole (4-ATA). L'UDETA est préférée pour une utilisation dans la présente invention.

Les amines portant des fonctions imidazolidone peuvent elles-mêmes être issues de la réaction de l'urée avec au moins un composé choisi parmi les alkylèneamines et les amines. Ainsi, l'UDETA peut être préparée en faisant réagir de l'urée avec de la diéthylène triamine(DETA).

Le nombre de groupes associatifs porté par le copolymère dans cette forme d'exécution selon l'invention peut être simplement ajusté en faisant varier la quantité d'agent de modification ou le temps et la température de réaction. On préfère en général que la quantité d'agent de modification représente de 0,5 à 15% en poids, plus préférentiellement de 1 à 5% en poids, par rapport au poids du copolymère porteur de fonctions réactives et/ou que le nombre moyen de groupes associatifs par chaîne de copolymère soit compris entre 1 et 200 et de préférence entre 1 et 30.

Le procédé de greffage est réalisé en faisant réagir l'agent de modification et le copolymère porteur de fonctions réactives. Cette étape peut être réalisée à l'état fondu, par exemple dans une extrudeuse ou un mélangeur interne à une température qui peut aller de 150°C à 300°C et, de préférence de 200 à 280°C. L'agent de modification est mélangé au polymère, seul, ou à l'aide d'un additif permettant l'imprégnation des grains de polymère solide par l'agent de modification préalablement fondu. Le mélange solide avant introduction dans l'extrudeuse ou le mélangeur peut être rendu plus homogène par réfrigération pour faire solidifier l'agent de modification. Il est également possible de doser ce dernier dans l'extrudeuse ou le mélangeur après un début de fusion du polymère à greffer. Le temps à la température de greffage peut aller de quelques secondes à 5 minutes. L'agent de modification peut être introduit dans l'extrudeuse sous forme de mélange-maître dans un polymère qui, peut être le polymère à greffer. Selon ce mode d'introduction, le mélange maître peut comporter jusqu'à 30% en poids de l'agent de modification ; ensuite, le mélange maître est « dilué » dans le polymère à greffer lors de l'opération de greffage. Selon une autre possibilité, le greffage peut être effectué par réaction en phase solvant, par exemple dans le chloroforme anhydre. Dans ce cas, la température de réaction peut aller de 5°C à 75°C, pendant des temps allant de quelques minutes à un jour et à des concentrations en polymère avant greffage comprises entre 1 et 50% en poids, par rapport au poids total de la solution.

Le copolymère porteur de groupes associatifs obtenu selon l'un ou l'autre des modes de réalisation ci-dessus peut se présenter notamment sous la forme de granulés ou de poudre. Il est mélangé au polymère (méth)acrylique décrit précédemment par tout moyen, notamment par calandrage, extrusion, mélange à l'état fondu dans une chambre de mélange, pressage, injection, mise en solution dans un solvant commun suivie d'une séparation du solvant.

Le taux de copolymère porteur de groupes associatifs représente par exemple de 0,1 à 75% en poids de ce mélange, par exemple de 1 à 40% en poids dans le cas du PMMA.

Il a été mis en évidence que ce copolymère permettait d'améliorer certaines propriétés mécaniques et chimiques du polymère (méth)acrylique auquel il est mélangé.

La présente invention a donc également pour objet l'utilisation d'un copolymère porteur de groupes associatifs tel que décrit précédemment, pour améliorer une ou plusieurs des propriétés suivantes d'un polymère (méth)acrylique : sa résistance au fluage, en particulier à plus de 25°C, sa température de transition vitreuse (Tg), son point de ramollissement Vicat, son adhésion aux surfaces métalliques telles que les surfaces en acier ou en aluminium, son allongement à la rupture, en particulier à plus de 25°C, sa tenue ou sa viscosité élongationnelle à l'état fondu, sa résistance chimique, sa processabilité, sa dureté de surface, sa résistance aux rayures, sa résistance dans les tests de « stress cracking ».

Le « stress-cracking » est un terme utilisé pour décrire un phénomène d'attaque chimique d'un produit agissant sur un matériau polymérique de façon peu perceptible lorsque ce matériau n'est pas soumis à une contrainte mécanique. Le contact du matériau avec le produit provoque cependant la formation de micro-fissures. Lorsque le matériau est alors mis sous contrainte une propagation des micro-fissures se produit, conduisant à une fragilisation du matériau et à la rupture de celui-ci.

Hormis le copolymère portant les groupes associatifs selon l'invention, la composition selon l'invention peut en outre renfermer divers additifs dont :
- des lubrifiants, tels que acide stearique,acide palmitique , ou l'alcool stearylique
- des colorants,
- des pigments minéraux ou organiques, tels que ceux décrits dans le document " Plastics Additives and Modifiers Handbook, Section VIII, Colorants ", J. Edenbaum, Ed., Van Nostrand, pages 889-954. A titre d'exemples de pigments utilisables, on peut citer le noir de carbone, le dioxyde de titane, l'argile, les particules métalliques ou les particules de mica traité de la marque IRIODIN^{®} commercialisées par MERCK.

- des stabilisants thermiques, tels que le terdodécyldisulfure (DtDDS), Irganox 1076, Tinuvin P.
- des agents anti-UV, tels que ceux décrits dans le document " Plastics Additives and Modifiers Handbook, chap. 16, Environmental Protective Agents ", J. Edenbaum, Ed., Van Nostrand, pages 208-271. De préférence, l'anti-UV est un composé de la famille des HALS, triazines, benzotriazoles ou benzophenones. On peut utiliser des combinaisons de plusieurs anti-UV pour obtenir une meilleure résistance aux UV.
- des co-stabilisants,
- des anti-oxydants, par exemple des phénols encombrés tels que les composés Irganox 1010 et 1098 de CIBA, les phosphites et les HALS,
- des charges ou renforts, notamment des charges cellulosiques, du talc, du carbonate de calcium, du mica ou de la wollastonite, du verre ou des oxydes ou hydrates métalliques,
- des agents antistatiques, tels que des dérivés aminés et des esters phosphoriques,
- des fongicides et biocides,
- des agents anti-choc, tels que les copolymères de MBS, dont le Clearstrength^{®} d'ARKEMA, et les modifiants acryliques de type core-shell tels que les Durastrength^{®} d'ARKEMA, ainsi que ceux décrits dans la demande internationale WO 06/053984,
- des agents ignifugeants, dont le trioxyde d'antimoine, le borate de zinc et les phosphate esters bromés ou chlorés, et ceux décrits dans la demande de brevet EP1777257,
- des agents mattants qui peuvent être des charges minérales telles que par exemple le talc, le carbonate de calcium, le dioxyde de titane, l'oxyde de zinc ou des charges organiques telles que par exemple les perles réticulées à base de styrène et/ou de MMA (des exemples de telles perles sont donnés dans EP 1174465),
- des solvants, et
- leurs mélanges.

Ces additifs peuvent par exemple représenter de 0,1 à 50% du poids total de la composition.

En plus de la forme solide, cette composition peut se présenter notamment sous la forme d'émulsions, de suspensions ou de solutions.

La composition selon l'invention peut servir à fabriquer des pièces utilisées dans l'automobile tels des feux de signalisation ou tableaux de bord, dans le bâtiment et la construction tels des vitres ou cadres de fenêtres, dans la décoration tels du mobilier ou des bijoux, dans l'hygiène-santé tels des baignoires, lavabos ou éprouvettes, dans l'électroménager tels des portes de micro-ondes ou bols de mixer, dans la bureautique et d'électronique tels des écrans de téléphone portable et des disques optiques (DVD, CD-Rom...), dans l'éclairage tels des globes et diffuseurs, dans la signalétique tels des enseignes et présentoirs, dans le domaine cosmétique, pour la réalisation de flacons.

L'invention a donc également pour objet les utilisations précitées.

Cette composition peut être mise en forme par calandrage, extrusion, extrusion-soufflage, moulage par injection, rotomoulage, thermoformage, etc.

L'invention sera mieux comprise à la lumière des exemples suivants, donnés à des fins d'illustration seulement, et par référence aux figures annexées dans lesquelles :
- la Figure 1 représente la viscosité complexe des polymères V825T, HT121 et de deux compositions de mélange PMMA et copolymère PMMA porteur de groupes associatifs, ou PMMA et copolymère PMMA sans groupes associatifs, dans des rapports 90/10.
- la Figure 2 représente la viscosité complexe des polymères V825T, HT121 et de deux compositions de mélange PMMA et copolymère PMMA porteur de groupes associatifs, ou PMMA et copolymère PMMA sans groupes associatifs, dans des rapports 75/25.
- la Figure 3 représente la déformation dans un test de fluage à 100°C sous 10 MPa de contrainte pour des compositions de mélange PMMA et copolymère PMMA porteur de groupes associatifs, ou PMMA et copolymère PMMA sans groupes associatifs, ainsi que pour le polymère V825T.
- la Figure 4 représente l'évolution de la contrainte normalisée lors du test de stress cracking pour les compositions de mélange PMMA et copolymère PMMA porteur de groupes associatifs, ou PMMA et copolymère PMMA sans groupes associatifs, ainsi que pour le polymère V825T.

### EXEMPLES

### Exemple 1 _{:} Préparation d'un copolymère selon l'invention par greffage de groupes associatifs

On a greffé un agent de modification, à savoir l'UDETA portant un groupe associatif imidazolidinyle et un groupe réactif amine, sur un copolymère de méthacrylate de méthyle d'acide méthacrylique et d'anhydride glutarique. Ce copolymère est lui même obtenu par cyclisation partielle d'un copolymère de méthacrylate de méthyle et d'acide méthacrylique. La réaction de cyclisation peut être réalisée à l'état fondu dans une extrudeuse ou tout autre mélangeur adéquat avec, éventuellement l'aide d'un catalyseur basique, tel que la soude. Cette réaction peut également être effectuée en étuve sous vide poussé. La réaction de greffage sur le copolymère portant les fonctions anhydride glutarique peut ensuite être effectuée, soit à l'état fondu en extrudeuse ou tout autre mélangeur adéquat, soit en solution dans un solvant approprié comme le chloroforme.

Précisément, on a partiellement cyclisé un copolymère de méthacrylate de méthyle et acide méthacrylique commercialisé par ARKEMA sous la dénomination Altuglas^{®} HT121 (copolymère à c. 5% en poids de comonomère acide méthacrylique) en le plaçant dans une étuve sous vide à 235°C pendant 24 heures. Les groupes acide du copolymère initial ont tendance à cycliser à plus de 90% par réaction avec soit un groupe acide voisin (départ d'eau), soit avec un groupe ester méthylique voisin (départ de méthanol). Le copolymère ainsi obtenu est ensuite greffé avec UDETA par extrusion du copolymère cyclisé en mélange avec UDETA dans une micro-extrudeuse bivis DSM munie d'un canal de recirculation et d'une capacité de 15g. La vitesse de rotation des vis est fixée à 200 tours par minute et la température à 230°C, un balayage d'azote permet d'éviter la dégradation des matériaux. L'UDETA, est introduit à raison de 4,5 % en masse, par rapport à l'ensemble copolymère-UDETA. Le temps de résidence du mélange polymère-UDETA dans la micro-extrudeuse est fixé à 5 minutes. Ce polymère modifié est ci-dessous désigné par « HT121g ».

### Exemple 2 : Préparation de compositions selon l'invention

L'échantillon HT121g obtenu à l'Exemple 1 et le produit HT121 ont été chacun mélangés à raison de 10% et 20% en poids avec le même PMMA (commercialisé par ARKEMA sous la dénomination Altuglas^{®} V825T). Les mélanges sont réalisés dans la même micro-extrudeuse que celle mentionnée dans l'exemple 1, à une température de 230°C sous balayage d'azote et pendant 5 minutes. La vitesse d'agitation est réglée à 200 tours par minute.

Le tableau 1 récapitule les 4 formulations obtenues.

**Tableau 1**

| Pourcentages massiques | V825T | HT121 | HT121g | Tg (°C) |
|---|---|---|---|---|
| Composition 1 | 90 | 10 | | 117 |
| Composition 2 | 75 | 25 | | 118,5 |
| Composition g1 | 90 | | 10 | 118 |
| Composition g2 | 75 | | 25 | 117,5 |

Ce tableau présente également les Tg des mélanges mesurées par DSC à 10°C/min, à l'aide d'une DSC Q1000 de TAinstruments fonctionnant dans le mode T4. Pour chaque mélange, une seule Tg est identifiable. Les Tg des V825T, HT121 et HT121g ont été mesurées dans les mêmes conditions respectivement à 114,5, 122 et 122°C. Les Tg des mélanges, uniques et comprises entre les Tg des 2 matériaux constituant le mélange, indiquent que les mélanges sont bien miscibles.

### Exemple 3 : Mesures rhéologiques

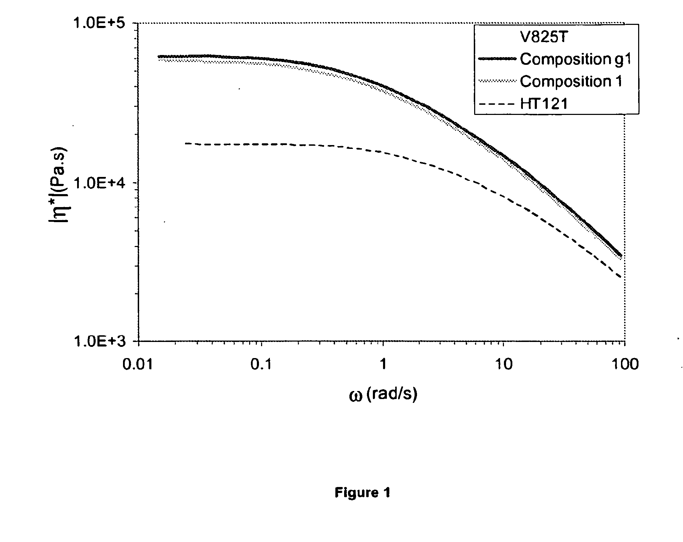

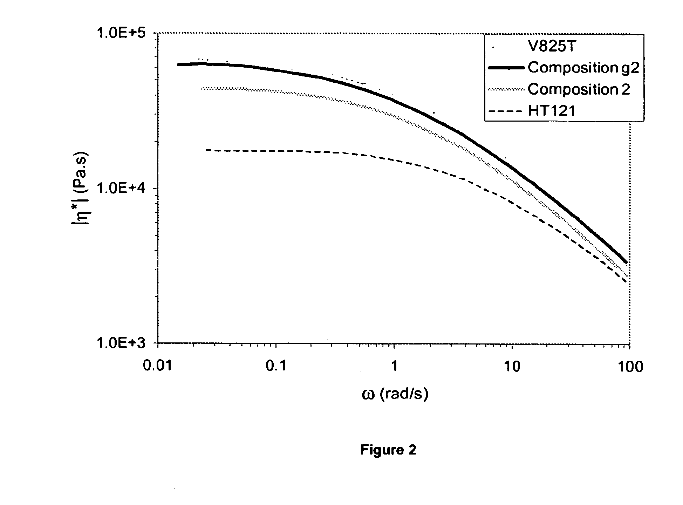

Les Compositions 1, 2, g1 et g2, et les polymères V825T et HT121 ont été soumis à des mesures rhéologiques à 160°C. Un rhéomètre ARES de Rheometric Scientific, équipé de plaques parallèles d'un diamètre de 25 mm a été utilisé. Les échantillons ont été séchés 16 heures à 105°C sous vide avant le test pour éviter la formation de bulles lors des expériences. Des balayages de fréquences entre 100 et 0,01 rad/s ont été effectués, les déformations étaient suffisamment faibles pour rester dans le domaine linéaire. Les Figures 1 et 2 représentent le module de la viscosité complexe pour les 6 produits étudiés.

Nous constatons que l'ajout du copolymère PMMA porteur de groupes associatifs ne se traduit pas par une augmentation de viscosité par rapport au V825T. Les compositions g1 et g2 auront donc une mise en forme très comparable à celle du V825T.

### Exemple 4 : Essais de fluage

Les Compositions 1, 2, g1 et g2 et le polymère V825T ont été soumis à un test de fluage à 100°C.

### 4A Protocole

Le test consiste à imposer une contrainte constante, en flexion encastrée, au matériau testé et à mesurer l'évolution de la déformation résultante au cours du temps. Pour une contrainte donnée, plus la résistance au fluage du matériau est grande, plus faible est la déformation au cours du temps. L'échantillon est constitué de la partie centrale d'une éprouvette de traction, injectée à l'aide d'une micro-presse à injecter DACA fonctionnant avec une pression de maintien de 12 bars. Les températures du fourreau et du moule ont été respectivement fixées à 285°C et 110°C. L'échantillon est un parallélépipède de 25 mm de long, 4 mm de large et 1,5 mm d'épaisseur. Le test est mené à l'aide d'une DMA 2980 de TA instruments équipée d'une géométrie de flexion encastrée. La température est fixée à 100°C, après que l'échantillon soit resté 5 minutes dans le four pour équilibrer la température, une contrainte de 10 MPa est appliquée pendant 3 heures. La déformation résultante de l'échantillon est mesurée au cours du temps.

### 4B Résultats

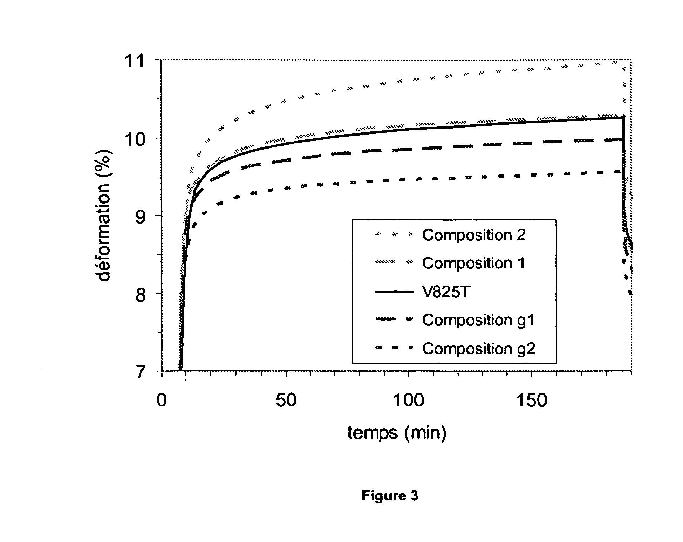

Comme illustré à la Figure 3, les Compositions g1 et g2, renfermant le copolymère porteur de groupes associatifs selon l'invention, présentent une meilleure résistance au fluage que le PMMA V825T seul. Les courbes de fluage des compositions 1 et 2 prouvent que cet effet n'est pas dû au HT121, ce dernier polymère non greffé entraîne au contraire une dégradation des propriétés de résistance au fluage.

### Exemple 5 : Essais de stress cracking

Les Compositions 1, 2, g1 et g2 et le polymère V825T ont été soumis à un test de stress cracking à température ambiante.

### 5A Protocole

Le test de stress cracking combine l'action d'un solvant et d'une contrainte. C'est un test important pour les matériaux polymères car une grande part des défauts observés lors de l'utilisation de ces matériaux est due à cette double action contrainte-solvant. Plus précisément, le test effectué consiste à imposer, en présence d'un solvant, une déformation constante en flexion trois-points au matériau testé. Les temps de rupture de l'échantillon ou d'apparition des fissures sont mesurés. L'évolution de la contrainte lors du test peut également être relevée. La dégradation de l'échantillon est représentée par ces phénomènes de rupture/fissure et par la rapidité de la baisse de contrainte lors du test. Les produits les plus résistants sont donc ceux avec les temps de dégradation les plus longs, ou avec la plus grande stabilité de la contrainte lors du test. L'échantillon est préparé suivant la même procédure que celle décrite dans l'exemple 4. Le test est mené à l'aide d'un équipement conçu en laboratoire : un rhéomètre ARES à déformation imposée munie d'un capteur de force normale est équipé d'une géométrie de flexion trois-points, où la longueur de l'échantillon entre les deux points extrêmes est de 24,25 mm. La déformation est fixée à 1,6 % à l'aide du contrôle de déplacement du rhéomètre et la contrainte est calculée à partir de la force normale enregistrée par le rhéomètre. Un tuyau plastique amène, d'une seringue montée sur un pousse-seringue, le solvant à déposer sur la surface de l'échantillon. Dès que la déformation souhaitée est atteinte, une goutte de solvant (mélange équi-massique eau/éthanol) est déposée sur l'échantillon. Une gouttelette est ensuite déposée toutes les deux minutes pour compenser les pertes dues à l'évaporation. Une caméra reliée à un ordinateur permet d'enregistrer l'évolution de l'aspect de surface de l'échantillon au cours du temps.

### 5B Résultats

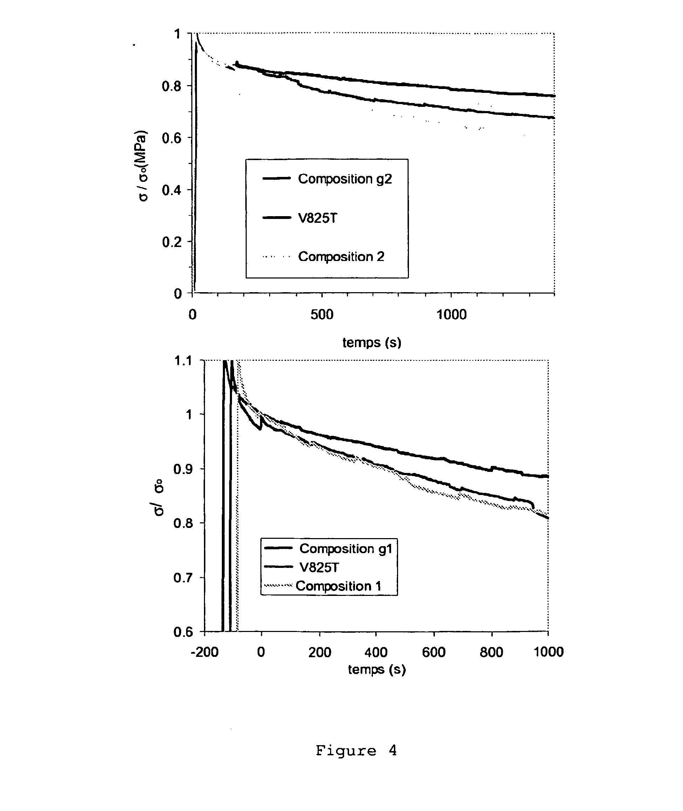

On observe, notamment sur la Figure 4 une moindre relaxation des contraintes pour les mélanges avec du HT121g1 et des fissures beaucoup moins nombreuses pour ces mêmes compositions par rapport au produit de référence V825T. Nous pouvons donc conclure que la Composition g1 présente une meilleure résistance au stress cracking que le V825T et que la composition 1, et la composition g2 présente également une meilleure résistance que le V825T et que la composition 2. Les compositions renfermant le copolymère porteur de groupes associatifs selon l'invention, présentent donc une meilleure résistance à l'action combinée d'un solvant et d'une contrainte que le PMMA V825T seul. Les courbes de fluage des compositions 1 et 2 prouvent que cet effet n'est pas dû au HT121, ce dernier polymère non greffé entraîne au contraire une dégradation des propriétés de résistance au stress cracking.

## Revendications

1. Composition comprenant au moins un polymère (méth)acrylique et au moins un copolymère renfermant des motifs issus d'au moins un premier monomère (A) permettant la compatibilité avec ledit polymère (méth)acrylique et renfermant au moins un second motif (B) porteur d'un groupe associatif.

2. Composition selon la revendication 1 **caractérisée en ce que** le polymère (méth)acrylique est choisi parmi soit du poly(méthacrylate de méthyle) soit un copolymère dont un des comonomères est le méthacrylate de méthyle.

3. Composition selon l'une quelconque des revendications 1 à 2, **caractérisée en ce que** le polymère (méth)acrylique représente de 10 à 99,5 % en poids, par rapport au poids total de la composition.

4. Composition selon l'une quelconque des revendications 1 à 2, **caractérisée en ce que** le polymère (méth)acrylique représente de 50 à 99 % en poids, par rapport au poids total de la composition.

5. Composition selon l'une quelconque des revendications 1 à 4, **caractérisée en ce que** le monomère (A) représente au moins 20% en mole du copolymère.

6. Composition selon l'une quelconque des revendications 1 à 5, **caractérisée en ce que** les groupes associatifs sont choisis parmi les groupes imidazolidonyle, triazolyle, triazinyle, bis-uréyle et uréido-pyrimidyle, de préférence un groupe imidazolidonyle.

7. Composition selon l'une quelconque des revendications 1 à 6, **caractérisée en ce que** ledit monomère (A) est un monomère dont l'homopolymère correspondant est connu pour être miscible avec le polymère (méth)acrylique ou dont la présence de motifs issus du monomère (A) entraîne la compatibilité avec le polymère (méth)acrylique, ce monomère étant choisi parmi : le méthacrylate de méthyle, l'acide acrylique, l'acide méthacrylique, les esters d'acide acrylique, les esters d'acide méthacrylique, l'acrylonitrile, l'anhydride maléique.

8. Composition selon l'une quelconque des revendications 1 à 7, **caractérisée en ce que** le copolymère est susceptible d'être obtenu par greffage des groupes associatifs sur un copolymère déjà constitué comprenant, outre le monomère (A), un monomère (B') renfermant au moins une fonction réactive, telle qu'une fonction acide, anhydride, alcool, mercaptan, amine, époxy ou isocyanate, de préférence anhydride, par réaction d'un ou plusieurs agents de modification, portant d'une part un groupe associatif, et d'autre part un groupe réactif, choisi parmi les groupes amine, mercaptan, époxy, isocyanate, anhydride, alcool, de préférence amine, ledit groupe réactif étant susceptible de former une liaison covalente avec ladite fonction réactive.

9. Composition selon la revendication 8, **caractérisée en ce que** le copolymère renfermant le monomère (B') est susceptible d'être obtenu par cyclisation d'un copolymère de (méth)acrylate d'alkyle et d'acide (méth)acrylique, dans des conditions de catalyse basique.

10. Composition selon l'une quelconque des revendications 1 à 7, **caractérisée en ce que** le copolymère est susceptible d'être obtenu par polymérisation à partir:
- d'une part, d'un monomère (A) qui est un monomère (méth)acrylique choisi parmi : le méthacrylate de méthyle, l'acide acrylique, l'acide méthacrylique, l'acrylate de butyle, l'acrylate de 2-éthylhéxyle, l'acrylate de méthyle, l'acrylate d'éthyle, le méthacrylate de méthoxy polyéthylèneglycol, l'acrylonitrile ; et l'anhydride maléique,
- d'autre part, d'un monomère (B) porteur de groupes associatifs, de préférence de groupes imidazolidonyle, qui est avantageusement choisi parmi : le méthacrylate d'éthylimidazolidone et le méthacrylamide d'éthylimidazolidone, et
- éventuellement, d'un ou plusieurs autres monomères choisis parmi les acides acrylique ou méthacrylique, leurs esters, leurs amides ou leurs sels, l'acide itaconique, ses esters, ses amides ou ses sels, et le styrène et ses dérivés.

11. Composition selon l'une quelconque des revendications 1 à 10, **caractérisée en ce que** le polymère (méth)acrylique est le poly(méthacrylate de méthyle) et le copolymère renfermant des motifs issus d'un monomère (A) est du méthacrylate de méthyle.

12. Utilisation d'un copolymère porteur de groupes associatifs, tel que décrit dans l'une quelconque des revendications 1 à 11, pour modifier une ou plusieurs des propriétés suivantes d'un polymère (méth)acrylique : sa résistance au fluage, en particulier à plus de 25°C, sa température de transition vitreuse (Tg), son point de ramollissement Vicat, son adhésion aux surfaces métalliques telles que les surfaces en acier ou en aluminium, son allongement à la rupture, en particulier à plus de 25°C, sa tenue ou sa viscosité élongationnelle à l'état fondu, sa résistance chimique, sa processabilité, sa dureté de surface, sa résistance aux rayures, sa stabilité thermique, sa résistance dans les tests de « stress cracking ».

13. Utilisation de la composition selon l'une quelconque des revendications 1 à 11 pour la fabrication des pièces ou de parties d'habitacles de véhicules automobiles, tels des feux de signalisation ou tableaux de bord, dans le bâtiment et la construction tels des vitres ou cadres de fenêtres, dans la décoration tels du mobilier ou des bijoux, dans l'hygiène-santé tels des baignoires, lavabos ou éprouvettes, dans l'électroménager tels des portes de micro-ondes ou bols de mixer, dans la bureautique et l'électronique tels des écrans de téléphone portable et des disques optiques (DVD, CD-Rom...), dans l'éclairage tels des globes et diffuseurs, dans la signalétique tels des enseignes et présentoirs, dans le domaine cosmétique, pour la réalisation de flacons.

## Claims

1. Composition comprising at least one (meth)acrylic polymer and at least one copolymer containing units derived from at least a first monomer (A) permitting compatibility with said (meth)acrylic polymer and containing at least a second unit (B) carrying an associative group.

2. Composition as claimed in claim 1, **characterised in that** the (meth)acrylic polymer is selected from either poly(methyl methacrylate) or a copolymer in which one of the comonomers is methyl methacrylate.

3. Composition as claimed in any one of claims 1 to 2, **characterised in that** the (meth)acrylic polymer represents 10 to 99.5 % by weight, relative to the total weight of the composition.

4. Composition as claimed in any one of claims 1 to 2, **characterised in that** the (meth)acrylic polymer represents 50 to 99 % by weight, relative to the total weight of the composition.

5. Composition as claimed in any one of claims 1 to 4, **characterised in that** the monomer (A) represents at least 20 mol % of the copolymer.

6. Composition as claimed in any one of claims 1 to 5, **characterised in that** the associative groups are selected from the imidazolidonyl, triazolyl, triazinyl, bis-ureyl and ureido-pyrimidyl groups, preferably an imidazolidonyl group.

7. Composition as claimed in any one of claims 1 to 6, **characterised in that** said monomer (A) is a monomer of which the corresponding homopolymer is known to be miscible with the (meth)acrylic polymer or of which the presence of unitsderived from the monomer (A) imparts compatibility with the (meth)acrylic polymer, this monomer being selected from: methyl methacrylate, acrylic acid, methacrylic acid, the esters of acrylic acid, the esters of methacrylic acid, acrylonitrile, maleic anhydride.

8. Composition as claimed in any one of claims 1 to 7, **characterised in that** the copolymer can be obtained by grafting associative groups on an already existing copolymer comprising, in addition to the monomer (A), a monomer (B') containing at least one reactive function such as an acid, anhydride, alcohol, mercaptan, amine, epoxy or isocyanate function, preferably anhydride, by a reaction of one or more modifying agents, carrying an associative group on the one hand and a reactive group on the other hand, selected from the amine, mercaptan, epoxy, isocyanate, anhydride, alcohol groups, preferably amine, said reactive group being capable of forming a covalent bond with said reactive function.

9. Composition as claimed in claim 8, **characterised in that** the copolymer containing the monomer (B') can be obtained by cyclisation of a copolymer of alkyl (meth)acrylate and (meth)acrylic acid under basic catalysis conditions.

10. Composition as claimed in any one of claims 1 to 7, **characterised in that** the copolymer can be obtained by polymerisation from:
- on the one hand, a monomer (A) which is a (meth)acrylic monomer selected from: methyl methacrylate, acrylic acid, methacrylic acid, butyl acrylate, 2-ethylhexyl acrylate, methyl acrylate , ethyl acrylate, methoxy polyethylene glycol methacrylate, acrylonitrile, and maleic anhydride,
- on the other hand, a monomer (B) carrying associative groups, preferably imidazolidonyl groups, which is advantageously selected from: ethylimidazolidone methacrylate and ethylimidazolidone methacrylamide, and
- optionally one or more other monomers selected from acrylic or methacrylic acids, esters thereof, amides thereof or salts thereof, itaconic acid, esters thereof, amides thereof or salts thereof, and styrene and derivatives thereof.

11. Composition as claimed in any one of claims 1 to 10, **characterised in that** the (meth)acrylic polymer is poly(methyl methacrylate) and the copolymer containing the unitsderived from a monomer (A) is methyl methacrylate.

12. Use of a copolymer carrying associative groups as defined in any one of claims 1 to 11 as a means of modifying one or more of the following properties of a (meth)acrylic polymer: its resistance to creep, in particular above 25°C, its glass transition temperature (Tg), its Vicat softening point, its adhesion to metallic surfaces such as steel or aluminium surfaces, its elongation at break, in particular above 25°C, its strength or its elongational viscosity in the molten state, its chemical resistance, its processability, its surface hardness, its resistance to scratching, its thermal stability, its resistance in "stress cracking" tests.

13. Use of the composition as claimed in any one of claims 1 to 11 for manufacturing pieces or interior parts of automotive vehicles such as indicator lamps or instrument panels, in building and construction such as for window panes or frames, for decoration such as furniture or jewellery, in health hygiene such as for baths, wash basins or test tubes, in domestic appliances such as microwave oven doors or mixing bowls, in the office and electronics sector such as for mobile telephone screens and optical discs (DVD, CD Rom ...), in lighting such as for light globes and diffusers, in signage such as for signs and display units, in the cosmetic sector, for making flasks.

## Patentansprüche

1. Zusammensetzung, umfassend wenigstens ein (Meth)acrylpolymer und wenigstens ein Copolymer, welches Einheiten enthält, die von wenigstens einem ersten Monomer (A) stammen, welches die Kompatibilität mit dem (Meth)acrylpolymer ermöglicht, und welches wenigstens eine zweite Einheit (B) enthält, welche eine assoziative Gruppe trägt.

2. Zusammensetzung gemäß Anspruch 1, **dadurch gekennzeichnet, dass** das (Meth)acrylpolymer ausgewählt ist aus entweder Poly(methylmethacrylat) oder einem Copolymer, bei dem eines der Comonomere Methylmethacrylat ist.

3. Zusammensetzung gemäß irgendeinem der Ansprüche 1 bis 2, **dadurch gekennzeichnet, dass** das (Meth)acrylpolymer 10 bis 99,5 Gew.-%, bezogen auf das Gesamtgewicht der Zusammensetzung, ausmacht.

4. Zusammensetzung gemäß irgendeinem der Ansprüche 1 bis 2, **dadurch gekennzeichnet, dass** das (Meth)acrylpolymer 50 bis 99 Gew.-%, bezogen auf das Gesamtgewicht der Zusammensetzung, ausmacht.

5. Zusammensetzung gemäß irgendeinem der Ansprüche 1 bis 4, **dadurch gekennzeichnet, dass** das Monomer (A) wenigstens 20 Mol-% des Copolymeren ausmacht.

6. Zusammensetzung gemäß irgendeinem der Ansprüche 1 bis 5, **dadurch gekennzeichnet, dass** die assoziativen Gruppen aus Imidazolidonyl-, Triazolyl-, Triazinyl-, Bis-Ureyl- und Ureidopyrimidyl-Gruppen, vorzugsweise aus einer Imidazolidonyl-Gruppe, ausgewählt sind.

7. Zusammensetzung gemäß irgendeinem der Ansprüche 1 bis 6, **dadurch gekennzeichnet, dass** das Monomer (A) ein Monomer ist, dessen entsprechendes Homopolymer bekanntermaßen mit dem (Meth)acrylpolymer mischbar ist, oder bei dem die Anwesenheit von Einheiten, die von dem Monomer (A) stammen, die Kompatibilität mit dem (Meth)acrylpolymer herbeiführt, wobei dieses Monomer ausgewählt ist aus: Methylmethacrylat, Acrylsäure, Methacrylsäure, Acrylsäureestern, Methacrylsäureestern, Acrylonitril und Maleinsäureanhydrid.

8. Zusammensetzung gemäß irgendeinem der Ansprüche 1 bis 7, **dadurch gekennzeichnet, dass** das Copolymer durch Aufpfropfen von assoziativen Gruppen auf ein bereits gebildetes Copolymer erhalten werden kann, welches, außer dem Monomer (A) ein Monomer (B') umfasst, welches wenigstens eine reaktive Funktion, wie beispielsweise eine Acid-, Anhydrid-, Alkohol-, Mercaptan-, Amin-, Epoxy- oder Isocyanatfunktion, bevorzugt Anhydridfunktion, enthält, durch Wirkung eines oder mehrerer Modifiziermittel, welche einerseits eine assoziative Gruppe und andererseits eine reaktive Gruppe tragen, die aus Amin-, Mercaptan-, Epoxy-, Isocyanat-, Anhydrid- und Alkoholgruppen, bevorzugt Amingruppen, ausgewählt ist, wobei die reaktive Gruppe eine kovalente Bindung mit der reaktiven Funktion ausbilden kann.

9. Zusammensetzung gemäß Anspruch 8, **dadurch gekennzeichnet, dass** das Copolymer, welches das Monomer (B') enthält, durch eine Zyklisierung eines Alkyl(meth)acrylat-(Meth)acrylsäure-Copolymeren unter basischen Katalyse-Bedingungen erhalten werden kann.

10. Zusammensetzung gemäß irgendeinem der Ansprüche 1 bis 7, **dadurch gekennzeichnet, dass** das Copolymer durch Polymerisation erhalten werden kann, ausgehend von:
- einerseits einem Monomer (A), bei dem es sich um ein (Meth)acryl-Monomer handelt, das ausgewählt ist aus: Methylmethacrylat, Acrylsäure, Methacrylsäure, Butylacrylat, 2-Ethylhexylacrylat, Methylacrylat, Ethylacrylat, Methoxypolyethylenglycolmethacrylat, Acrylonitril und Maleinsäureanhydrid,
- andererseits einem Monomer (B), welches assoziative Gruppen, vorzugsweise Imidazolidonylgruppen, trägt und vorteilhafterweise ausgewählt ist aus: Ethylimidazolidonmethacrylat und Ethylimidazolidonmethacrylamid, und,
- gegebenenfalls, einem oder mehreren anderen Monomer(en), ausgewählt aus Acrylsäuren oder Methacrylsäuren, deren Estern, deren Amiden oder deren Salzen, Itaconsäure, deren Estern, deren Amiden oder deren Salzen, und Styrol und dessen Derivaten.

11. Zusammensetzung gemäß irgendeinem der Ansprüche 1 bis 10, **dadurch gekennzeichnet, dass** das (Meth)acrylpolymer Poly(methylmethacrylat) ist, und dass das Copolymer, welches Einheiten enthält, die von einem Monomer (A) stammen, Methylmethacrylat ist.

12. Verwendung eines assoziative Gruppen tragenden Copolymeren, wie in irgendeinem der Ansprüche 1 bis 11 beschrieben, zur Modifizierung einer oder mehrerer der folgenden Eigenschaften eines (Meth)acrylpolymeren: dessen Kriechbeständigkeit, insbesondere oberhalb von 25°C, dessen Glasübergangstemperatur (Tg), dessen Vicat-Erweichungspunkt, dessen Adhäsion an metallische Oberflächen, wie beispielsweise Stahl- oder Aluminium-Oberflächen, dessen Bruchdehnung, insbesondere oberhalb von 25°C, dessen Verhalten oder dessen Elongationsviskosität in geschmolzenen Zustand, dessen chemische Beständigkeit, dessen Verarbeitbarkeit, dessen Oberflächenfestigkeit, dessen Kratzfestigkeit, dessen Wärmebeständigkeit, dessen Beständigkeit in Spannungsriss ("Stress-Cracking") -Tests.

13. Verwendung der Zusammensetzung gemäß irgendeinem der Ansprüche 1 bis 11 zur Herstellung von Teilen oder Innenteilen von Kraftfahrzeugen, wie beispielsweise Signallichter oder Armaturenbretter, im Bauwesen und in der Konstruktion, wie beispielsweise Glasscheiben oder Fensterrahmen, in der Dekoration, wie beispielsweise Mobiliar oder Schmuck, im Hygiene- und Gesundheitswesen, wie beispielsweise Wannen, Waschbecken oder Reagenzgläser, in Elektrohaushaltsgeräten, wie beispielsweise Türen von Mikrowellengeräten oder Rührschüsseln, in der Bürotechnik und Elektronik, wie beispielsweise Displays von Mobiltelefonen und optische Platten (DVD, CD-Rom...), in der Beleuchtung, wie beispielsweise Lampenglocken und Diffusor, in der Beschilderung, wie beispielsweise Schilder und Aufsteller, im kosmetischen Bereich, zur Herstellung von Flakons.
